## Europäisches Patentamt

## European Patent Office

## Office européen des brevets

(11) Veröffentlichungsnummer: **0 234 363**
**A1**

(12) **EUROPÄISCHE PATENTANMELDUNG**

(21) Anmeldenummer: **87101625.9**

(22) Anmeldetag: **06.02.87**

(51) Int. Cl.³: **F 02 C 6/04**
**F 01 K 21/04**

(30) Priorität: **19.02.86 CH 669/86**

(43) Veröffentlichungstag der Anmeldung:
**02.09.87 Patentblatt 87/36**

(84) Benannte Vertragsstaaten:
**DE FR GB IT NL**

(71) Anmelder: **GEBRÜDER SULZER AKTIENGESELLSCHAFT**
**Zürcherstrasse 9**
**CH-8401 Winterthur(CH)**

(72) Erfinder: **Mandrin, Charles, Dr.**
**Im Laubegg 7**
**CH-8406 Winterthur(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123 Postfach 14 02 68**
**D-4000 Düsseldorf(DE)**

(54) **Anlage zum Erzeugen von Druckgas.**

(57) Die Anlage zum Erzeugen von Druckgas weist mehrere Stufen von in Serie geschalteten Gaserzeugern (20, 23) auf, deren Abgas Heizmedium für Dampferzeuger (21, 24) ist. Den Dampferzeugern (21, 24) sind wassergekühlte Wärmeaustauscher (22, 25) nachgeschaltet, in welchen das Gas auf Umgebungstemperatur gekühlt wird. Der in den Dampferzeugern (21,24) entstehende Dampf ist Dampfquelle für eine Dampfturbine (41), die einen Kompressor (26) antreibt, in welchem das Gas auf Enddruck verdichtet wird. Mindestens aus einem Kühlwasserkreislauf wird eine Teilmenge des im Wärmeaustauscher (25) erwärmten Wassers entnommen und mindestens einem Gaserzeuger (23) zwischen Kompressor (23a) und Brennkammer (23b) und zwischen Brennkammer (23b) und Turbine (23c) zugemischt.

Hierdurch wird der Durchsatz in der Turbine (23c) erhöht und die Grösse des Verdampfers (24) wird reduziert. Günstigenfalls kann der Verdampfer (24) ganz in Fortfall kommen.

**EP 0 234 363 A1**

FIG. 1

P.6024 Sdrr

Gebrüder Sulzer Aktiengesellschaft, Winterthur, Schweiz

## Anlage zum Erzeugen von Druckgas

Die Erfindung betrifft eine Anlage zum Erzeugen von Druckgas gemäss dem Oberbegriff des Hauptanspruchs.

Druckgas, das hauptsächlich aus Luft und zum anderen Teil aus Verbrennungsprodukten, wie $CO_2$ und Wasserdampf besteht, kommt insbesondere zur Druckeinspritzung auf Oel- und Gasfeldern zum Einsatz, auch als Rohstoff für chemische Industrie, z.B. für die Ammoniakherstellung, zur Vergasung von Brennstoffen oder zur Stahlerzeugung.

Aus der CH-PS 630 702 ist eine Anlage zum Erzeugen von Druckgas bekannt, die mehrere Stufen von in Serie geschalteten Gaserzeugern aufweist. Die Gaserzeuger bestehen hierbei jeweils aus einem Kompressor, einer Brennkammer und einer den Kompressor antreibenden Turbine. Hierbei dient das Abgas jeder Turbine als Heizmedium für jeweils einen Dampferzeuger. In jeder Stufe ist dem Dampferzeuger ein Wärmeaustauscher nachgeschaltet, der mit Kühlwasser beschickt wird, und der Abgas auf Umgebungstemperatur abkühlt. In den aufeinanderfolgenden Stufen wird der Druck des Gases gesteigert. Der Dampf aus den Dampferzeugern dient als Dampfquelle für eine Dampfturbine, welche einen Kompressor antreibt, der das Gas auf den Enddruck verdichtet.

Bei etlichen Anwendungen von Druckgas, insbesondere bei der Druckeinspritzung auf Oel- und Gasfeldern, im Meer von Schiffen oder Plattformen von Bohrinseln aus, ist es wesentlich, Gewicht und Abmessungen der Gesamtanlage möglichst gering zu halten. Wie eine Berechnung der bekannten Anlage ergibt, sind die schwersten, grössten und kostenaufwendigsten Komponenten die Dampferzeuger.

Es trifft zwar zu, dass bei den bekannten Anlagen die Wärmerückgewinnung aus den Abgasen unter einem höheren Druck als der atmosphärische stattfindet, so dass die Abmessungen der Wärmeaustauscher geringer sind und der negative Einfluss des Druckabfalles auf die Turbinenleistung auch geringer ist als bei üblichen Abwärme-Dampferzeugern, denen ein Kamin nachgeschaltet ist.

Es ist jedoch erstrebenswert und Ziel der Erfindung, eine Anlage der vorstehenden Art so zu gestalten, dass die Dampferzeuger gewichts- und abmessungsmässig weiter reduziert werden bzw. in Grenzfällen ganz in Fortfall kommen können bei gleicher Druckgasförderung der Gesamtanlage, wobei je nach Optimierung, eine reduzierte Wärmerückgewinnung und damit ein höherer Brennstoffverbrauch eventuell in Kauf genommen wird.

Zur Lösung dieser Aufgabe sind erfindungsgemäss die im kennzeichnenden Teil des Anspruchs 1 angegebenen Merkmale vorgesehen.

Die Merkmale der Unteransprüche betreffen vorteilhafte Weiterbildungen bzw. Ausführungsformen der Erfindung.

- 3 -

Wie aus den Unteransprüchen ersichtlich, kann die Wasserzumischung zwischen Brennkammer bzw. katalytischem Reaktor und Turbine eines Gaserzeugers oder zwischen Kompressor und Brennkammer bzw. katalytischem Reaktor oder vorteilhaft an beiden Stellen gleichzeitig vorgenommen werden, wie an nachstehender Stelle noch im einzelnen erläutert wird.

Bei n Stufen lässt die Erfindung in Bezug auf die als Wasserquellen dienenden n Kühlwasserkreisläufe mit Einspeisestellen zwischen den n Stufen der n Gaserzeuger alle möglichen Kombinationen zu.

Bei Zumischung von Kühlwasser an einer Stelle zwischen der Brennkammer bzw. dem katalytischen Reaktor und dem Gaseintritt in die Turbine steigt der Volumendurchsatz in der stromabwärts liegenden Turbine. Somit steigt die Kompressionsleistung des mit der Turbine mechanisch verbundenen Kompressors. Entsprechend reduziert sich die Leistung von einem, von einer Dampfturbine angetriebenen Endkompressor und damit der Dampfbedarf der Dampfturbine. Gleichzeitig werden die Abgase auf den Austrittsseiten der Turbinen der Gaserzeuger kälter, und die Dampferzeugung in den nachgeschalteten Verdampfern sinkt. Jedoch reduziert sich auch entsprechend der Dampfbedarf in der den Endkompressor antreibenden Dampfturbine.

In diesem Fall ist ein Dampfkreislauf in einen Gaskreislauf integriert mit Einsparung der Wärmeübertragung durch eine feste Wand.

- 4 -

Die Vorteile einer Wasserbeimischung zwischen Kompressor und Brennkammer bzw. katalytischem Reaktor eines Gaserzeugers bestehen insbesondere darin, dass das an dieser Stelle zugemischte Wasser in der Brennkammer bzw. in dem katalytischen Reaktor auf eine sehr hohe Temperatur gebracht wird. Die Entspannung des Wasserdampfes hat eine höhere Turbinenleistung zurfolge als die gleiche Wasserdampfmenge, die nach der Brennkammer eingespritzt wird. Diese Wasserdampfmenge kühlt nämlich zuerst das Wasserdampf-Brenngasgemisch ab und wird erst dann entspannt.

So erbringt beispielsweise eine Entspannung mit Druckverhältnis 1.94 und einer Eintrittstemperatur von 650° C eine höhere Leistung als eine Entspannung mit gleichem Druckverhältnis bei einer Eintrittstemperatur an der Turbine von nur 500° C.

Die Wasserzumischung vor der Brennkammer bzw. dem katalytischen Reaktor, im Falle der Sauerstoffgehalt des Brenngases reduziert werden soll, erlaubt bei gleichbleibenden Temperaturen eine höhere Belastung der Brennkammer bzw. des katalytischen Reaktors. Kritisch ist für die Brennkammer bzw. den katalytischen Reaktor die Austrittstemperatur, wobei die Grenztemperaturen streng eingehalten werden müssen. Ein grösserem Massendurchsatz erlaubt bei gleichem Temperaturgrenzwert mehr Brennstoff zu verbrennen und damit die Anzahl der in Serie geschalteten Brennkammern bzw. katalytischen Reaktoren zu reduzieren.

Die Wasserzumischung an dieser Stelle ist durch die nach dem Kompressor vorhandene fühlbare Wärmemenge begrenzt.

Würde man nämlich eine zu grosse Wassermenge zumischen, wäre wegen mangelnder Wärmemenge eine vollständige Verdampfung nicht mehr möglich. Zwar wäre es möglich, durch von aussen zugeführte Wärme eine vollständige Verdampfung zu erreichen, jedoch würde dieses mit der Aufgabe der Erfindung an sich in Widerspruch stehen, da eine möglichst weitgehende Reduktion von erforderlichen wärmeübertragenden Wänden angestrebt ist.

Es wird daher in vielen Fällen vorteilhaft sein, ausser einer Wasserzumischung vor der Brennkammer bzw. vor dem katalytischen Reaktor, auch eine Wasserzumischung nach diesen Komponenten vorzunehmen.

Gegebenenfalls kann das Wasser vor seiner Zumischung mindestens teilweise mittels Prozesswärme oder einer fremden Wärmequelle verdampft werden.

Die Erfindung wird im folgenden anhand von Ausführungsbeispielen erläutert.

Es zeigen
Fig. 1 ein Fliess-Schema für eine Anlage zur Druckgasgewinnung mit Wasserrückführung innerhalb einer Stufe n mit Dampferzeugung;
Fig. 2 ein Fliess-Schema mit Wasserrückgewinnung innerhalb einer Stufe n ohne Dampferzeugung;
Fig. 3 ein Fliess-Schema mit Wasserrückführung innerhalb einer Stufe n mit Dampferzeugung und einem zusätzlichen Verdampfer;

- 6 -

Fig. 4 ein Fliess-Schema mit Wasserrückführung aus einer Stufe n in eine Stufe n -1 mit Dampferzeugung und

Fig. 5 ein Fliess-Schema mit Wasserrückführung aus einer Stufe n in eine Stufe n -1 ohne Dampferzeugung.

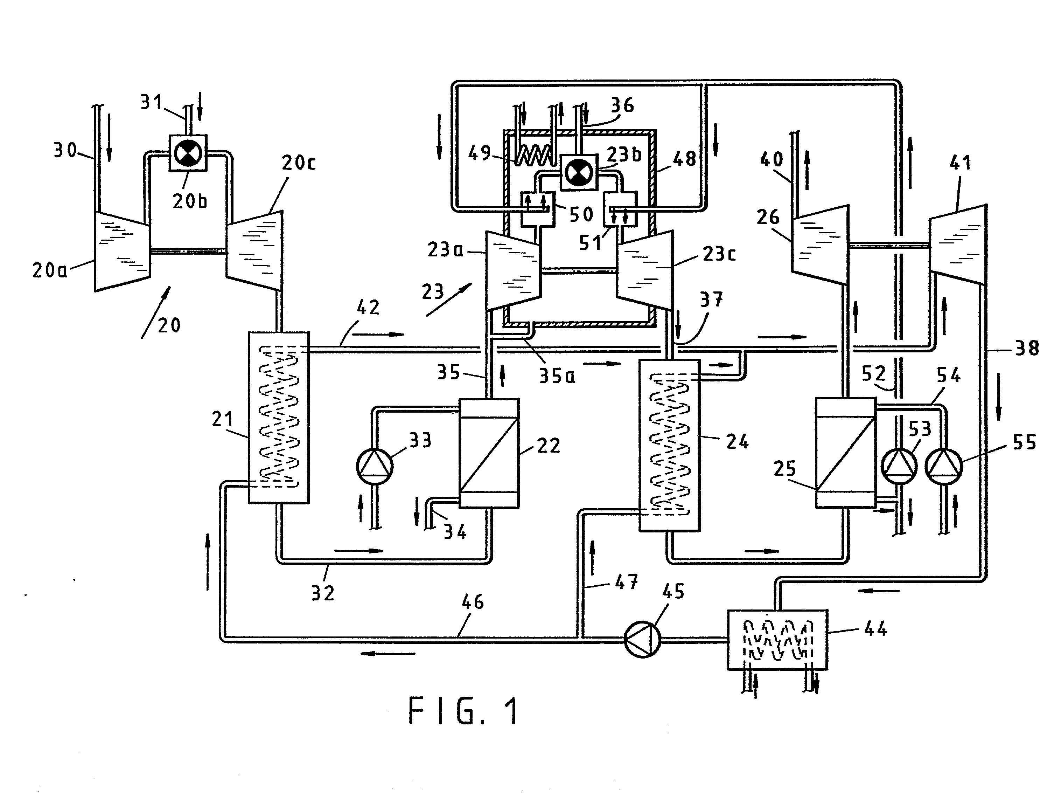

Die Anlage gemäss Fig. 1 besteht im wesentlichen aus einem Gaserzeuger 20, z.B. nach Strahltriebwerk-Bauart oder aus einem Turbolader, einem Dampferzeuger 21, einer als Kühler eingesetzten Waschkolonne 22, einem weiteren Gaserzeuger 23, einem weiteren Dampferzeuger 24, einer weiteren Waschkolonne 25, einem Kompressor 26 sowie einer Dampfturbine 41. Der Gaserzeuger 20 weist bekanntlich einen Kompressionsteil 20a, eine oder mehrere Brennkammern 20b und einen Expansionsteil 20c auf, der den Kompressionsteil antreibt.

Anstelle der Brennkammern 20c können auch katalytische Reaktoren eingesetzt sein, im Falle der Sauerstoffgehalt des Druckgases unterhalb der Zündgrenze liegen soll.

Da der Ansaugdruck des Gaserzeugers 23 höher ist als der atmosphärische, kann dieser Gaserzeuger aus Festigkeitsgründen von einem Gehäuse 48 umgeben sein, das ein Gas enthält, dessen Druck mindestens dem Ansaugdruck des Kompressionsteils 23a entspricht. Dabei kann das Druckgas in dem Gehäuse 48 eingeschlossen sein, oder kann von dem Abgas in der Ansaugleitung 35 des Gaserzeugers 23 über eine Leitung 35a abgezweigtes Gas sein. In jedem Fall ist das Gehäuse mit einer Kühlvorrichtung 49 versehen, um Strahlungsverluste abzuführen.

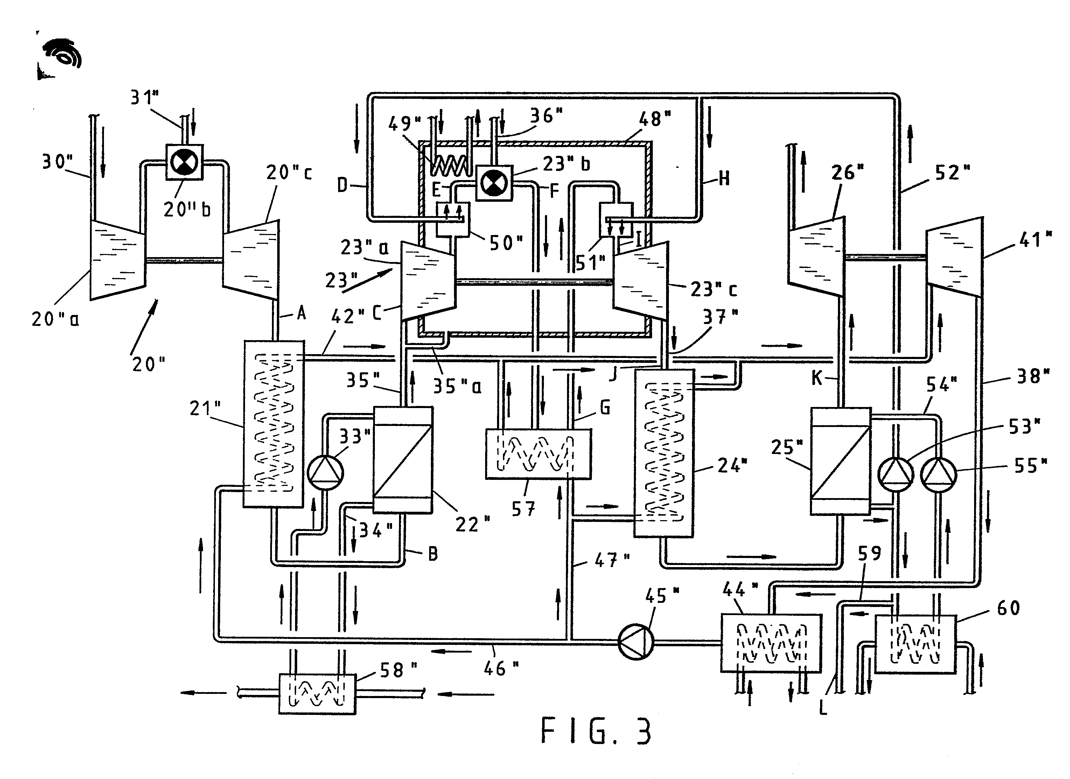

Erfindungsgemäss sind Zumischeinrichtungen 50 und 51 für in einer Waschkolonne 25 erwärmtes Wasser angeordnet. Die Kühlwasserkreisläufe werden an nachstehender Stelle anhand der Fig. 3 besprochen.

Im vorliegenden Ausführungsbeispiel sind die beiden Einrichtungen 50 und 51 über eine Leitung 52 über eine Pumpe 53 mit dem Kühlwasserkreislauf der Waschkolonne 25 verbunden.

Die Zumischeinrichtungen sind als Einspritzeinrichtungen mit einfachen Düsen ausgebildet. Wenn es sich auch hierbei um eine besonders vorteilhafte Ausführungsform handelt, so können diese Einrichtungen beispielsweise auch aus Zerstäuberdüsen oder aus gelochten Rohren bestehen.

Es kann auch vorteilhaft sein, nach der Einspritzung einen Packungskörper, wie er z.B. in der CH-PS 398 503 für Austauschkolonnen beschrieben ist, anzuordnen, bzw. einen statischen Mischer, wie er beispielsweise aus der CH-PS 537 208 bzw. 547 120 bekannt ist, vorzusehen.

Es ist weiterhin auch möglich, anstelle von Düsen die Zumischeinrichtung in Art einer Gegenstrom-Austauschkolonne mit Packungskörpern oder mit Böden einzusetzen, wobei das Gas die Kolonne von unten nach oben und das eingespritze Wasser im Gegenstrom hierzu, von oben in die
Kolonne eingeleitet wird. Die Anlage arbeitet im Betrieb
in der folgenden Weise:

Der Gaserzeuger 20 saugt im Ueberschuss Frischluft von
Atmosphärendruck über eine Leitung 30 an. Der Brennstoff
für die Brennkammern 20 b wird über eine Leitung 31 zugeführt. Das Abgas, das den Expansionsteil 20c verlässt,
bildet das Heizmedium für den Dampferzeuger 21. Das gekühlte Abgas fliesst von dort über eine Leitung 32 zur
Waschkolonne 22, in der es durch Berieselung mit Wasser,
das unter Druck durch eine Pumpe 33 eingespritzt wird,
weiter auf Raumtemperatur abgekühlt wird. Das in der
Waschkolonne anfallende warme Wasser wird über eine
Leitung 34 abgeführt. Das gekühlte Abgas strömt über
eine Leitung 35 zum Kompressionsteil 23a des zweiten
Gaserzeugers 23. Der Brennstoff erreicht die Brennkammer
23b über eine Leitung 36. Dem im Kompressor 23a verdichteten
Gas wird eine Teilmenge des in der Waschkolonne 25 erwärmten Wassers mittels der Einspritzeinrichtung 50 zugemischt und hierbei verdampft. Eine weitere Teilmenge des
erwärmten Wassers wird mit Hilfe der Einspritzeinrichtung
51 dem Gas vor Eintritt in die Turbine 23c zugemischt.
Das heisse Abgas, das den Expansionsteil 23c verlässt,
strömt über eine Leitung 37 zum zweiten Dampferzeuger 24
und von dort durch die Waschkolonne 25. In der Waschkolonne
25 wird analog zur Waschkolonne 21 das heisse Abgas
durch Berieselung mit Wasser, das unter Druck durch eine
Leitung 54 mittels einer Pumpe 55 eingespritzt wird,
auf Umgebungstemperatur gekühlt. Nach der Waschkolonne 25
wird das abgekühlte Abgas auf Enddruck komprimiert und
über eine Leitung 40 einem (nicht gezeichneten) Verbraucher zugeführt. Der Kompressor 26 wird angetrieben durch die Dampfturbine 41, die über eine Leitung 42 mit Dampf vom Dampferzeuger 21 und über eine Leitung 43 mit Dampf vom zweiten Dampferzeuger 24 gespeist wird. Der in der Dampfturbine 41 entspannte Wasserdampf kondensiert in einem über eine Leitung 38 angeschlossenen Kondensator 44. Das Kondenswasser wird von einer Pumpe 45 angesaugt und zum Teil über eine Leitung 47 dem Dampferzeuger 24, zum anderen Teil über eine Leitung 46 dem Dampferzeuger 21 als Speisewasser zugeführt.

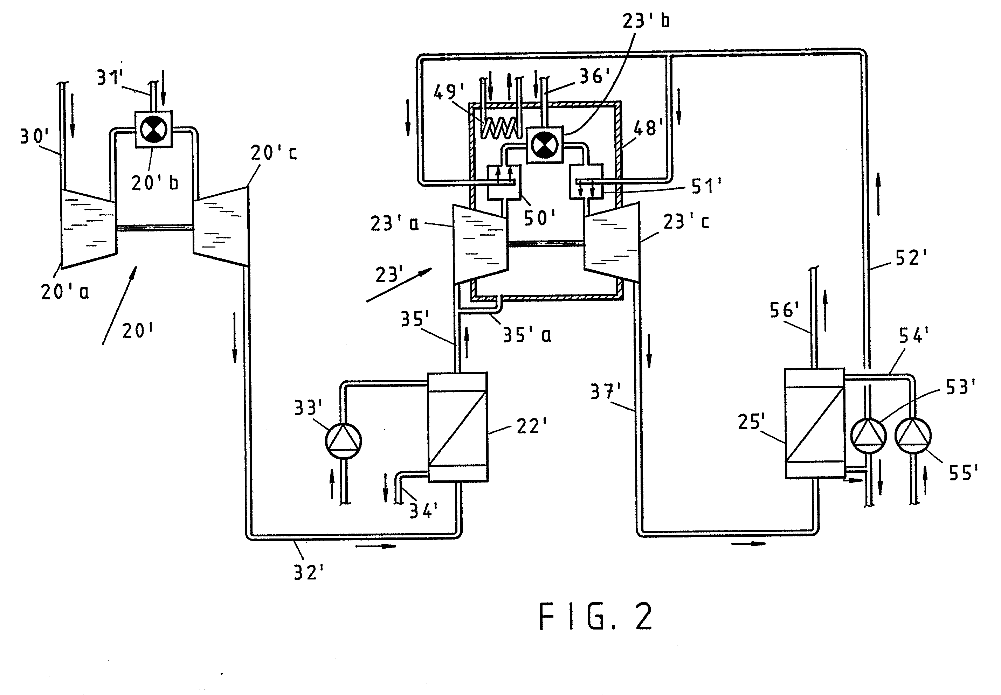

In der in Fig. 2 dargestellten Ausführungsform sind die mit Fig. 1 übereinstimmenden Einrichtungen der Druckgasanlage mit den gleichen Bezugsziffern bezeichnet und mit einem " ' " versehen. Entsprechend sind auch in den Fig. 3 - 5 die übereinstimmenden Einrichtungen gleich beziffert, nur jeweils mit " " " bis "IV" bezeichnet.

Die Fig. 2 betrifft eine Anlage, in welcher keine separaten Verdampfer 21 bzw. 24 nach den Austritten des Gases aus den Turbinen 20'c und 23'c vorgesehen sind.

Der erforderliche Druck des Produktgases wird hierbei ausschliesslich in den Kompressoren 20'a und 23'a erzeugt. Das Produktgas wird aus der Anlage durch eine Leitung 56 einem nicht dargestellten Verbraucher zugeführt.

Das in Fig. 3 dargestellte Ausführungsbeispiel stimmt mit Fig.1 bis dahin überein, dass im Strömungsweg des Druckgases hinter der Brennkammer 23'' b ein Verdampfer 57 angeordnet ist. Dieser Verdampfer ist in den Dampfkreislauf dadurch integriert, dass er zwischen der Kondensatleitung 47'' und der Dampfleitung 42'' angeordnet ist.

Es sei darauf hingewiesen, dass anstelle eines Verdampfers auch ein Vorwärmer oder Ueberhitzer oder eine Kombination dieser Einrichtung verwendet werden kann, die allgemein mit "Dampferzeuger" bezeichnet werden kann.

In der vorliegenden Ausführungsform sind im Detail die Kühlwasserkreisläufe dargestellt, welche in allen dargestellten Ausführungsbeispielen gleich ausgebildet sein können.

In dem der ersten Stufe zugehörigen Kühlwasserkreislauf ist ausser der Pumpe 33'' und der Waschkolonne 22'' ein Kühler 58 angeordnet, der beispielsweise mit Luft oder bei Verwendung der Anlage auf einem Schiff von Meerwasser gekühlt sein kann. Die gemäss nach Fig. 3 dargestellte Anlage produziert kein Ueberschusswasser in der Kolonne 22'', weil die Temperatur in der Leitung 35'' so hoch gewählt ist, dass das in Brennkammer 20'' produzierte Wasser sich auch nach der Abkühlung immer noch vollständig in der Gasphase befindet. In dem der Waschkolonne 25'' zugeordneten Kühlwasserkreislauf ist ebenfalls ein Kühler 60 angeordnet, der beispielsweise mit Luft oder Meerwasser gekühlt sein kann. Für die Ableitung von Ueberschusswasser ist eine Leitung 59 angeschlossen.

Ueberschusswasser wird aufgrund des bei der Verbrennung frei werdenden Wasserstoffs erzeugt und in der Waschkolonne 25'' ausgeschieden. Dieses Wasser ist mit Kohlendioxid gesättigt, enthält aber keine mineralischen Salze oder sonstigen Verunreinigungen.

- 11 -

Ueberschusswasser aus der Leitung 59 braucht nur belüftet zu werden, um Kolendioxid zu entfernen, bevor es als Zusatzwasser in einem thermischen Entgaser eingesetzt wird.

Weitere mögliche Anwendungen des Ueberschusswassers bestehen darin, dass es ohne Aufbereitung als Waschflüssigkeit dient, um aus salzhaltiger Luft Meersalz am Eintritt der ersten Kompressionsstufe auszuwaschen, oder dass aus dem Ueberschusswasser mit Hilfe einer einfachen Aufbereitung, die im wesentlichen aus einer Belüftung besteht, Trinkwasser oder Industriewasser gewonnen werden kann, um den Bedarf anderer Anlagen zu decken. Dieses ist von besonderem Vorteil für Bohrinseln und Schiffe, wo sonst noch zusätzliche Anlagen zur Meerwasserentsalzung erforderlich wären.

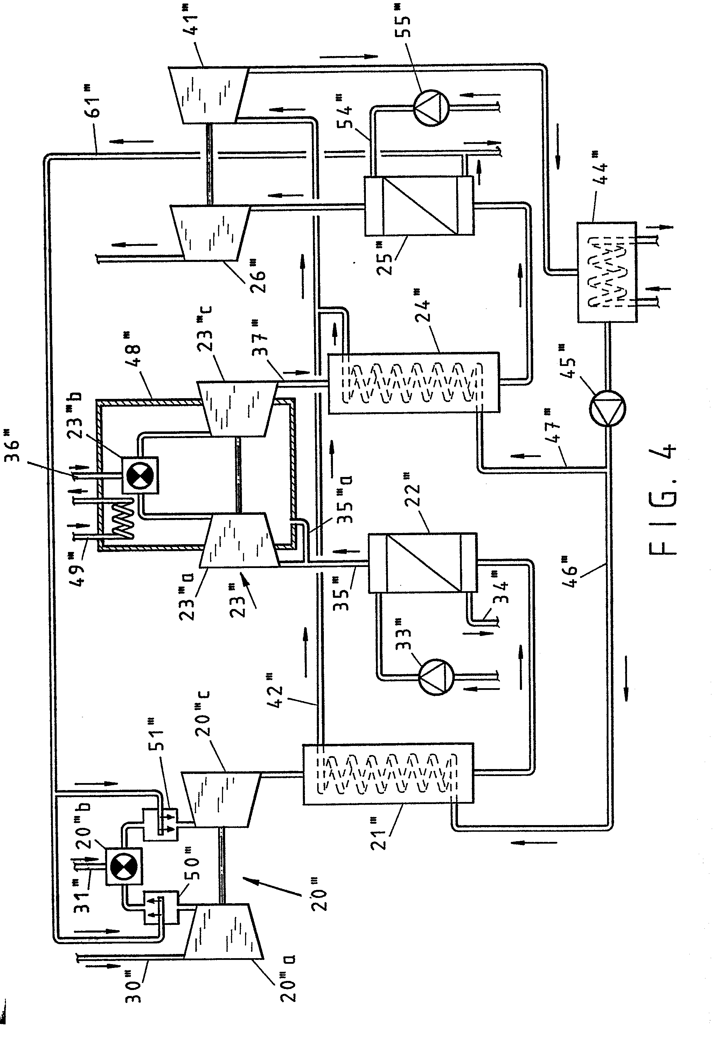

Das in Fig. 4 dargestellte Ausführungsbeispiel stimmt mit Fig. 1 bis darauf überein, dass Wasser nicht aus der gleichen Stufe n entnommen wird, sondern Wasser aus der Stufe n der Stufe n -1 durch eine Leitung 61 zugeführt wird. In diesem Fall ist keine Pumpe für das Wasser erforderlich.

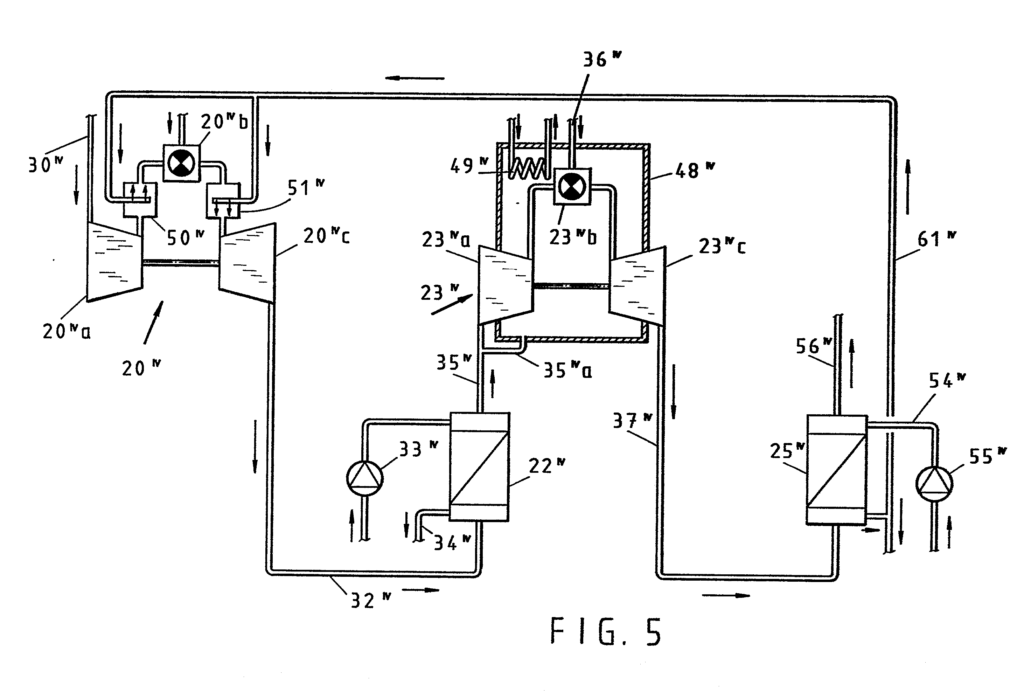

Eine Ausführungsform einer Anlage gemäss Fig. 5 stimmt mit Fig. 4 bis darauf überein, dass keine separaten Verdampfer nach den Turbinen $20^{IV}c$ und $23^{IV}c$ vorgesehen sind (vgl. auch Fig. 2).

Abschliessend sei darauf hingewiesen, dass die Erfindung alle Kombinationen bezüglich Wasserentnahme und Wasserzumischung bei n Stufen gemäss Kennzeichen des Anspruch 1 umfasst.

- 12 -

Nachstehend wird ein Zahlenbeispiel für eine Anlage gemäss Fig. 3 angegeben.

Zahlenbeispiel für eine Anlage gemäss Fig. 3

| | Temp. (°C) | Druck (bar) | Durchflussmenge (kg/s) | | | | |
| --- | --- | --- | --- | --- | --- | --- | --- |
| | | | $N_2$ | $O_2$ | $CO_2$ | $H_2O$ | Argon |
| A | 714.7 | 3.78 | 67.010 | 15.081 | 4.277 | 2.704 | 1.15 |
| B | 298 | 3.06 | 67.010 | 15.081 | 4.277 | 2.704 | 1.15 |
| C | 53 | 3.00 | 67.010 | 15.081 | 4.277 | 2.704 | 1.15 |
| D | 55 | 15 | - | - | - | 4.00 | - |
| E | 133.4 | 10 | 67.010 | 15.081 | 4.277 | 6.704 | 1.15 |
| F | 847 | 9.7 | 67.046 | 7.998 | 9.798 | 10.194 | 1.15 |
| G | 690.6 | 9.4 | 67.046 | 7.998 | 9.798 | 10.194 | 1.15 |
| H | 55 | 15 | - | - | - | 1.45 | - |
| I | 649.2 | 9.3 | 67.046 | 7.998 | 9.798 | 11.644 | 1.15 |
| J | 510.3 | 4.81 | 67.046 | 7.998 | 9.798 | 11.644 | 1.15 |
| K | 55 | 4.75 | 67.046 | 7.998 | 9.798 | 1.785 | 1.15 |
| L | 55 | 4.75 | - | - | - | 4.409 | - |

Patentansprüche
_____

1. Anlage zum Erzeugen von Druckgas, insbesondere von Druckluft, mit mindestens zwei Stufen von in Serie geschalteten Gaserzeugern, welche je aus einem Kompressor, einer Brennkammer oder einem katalytischen Reaktor und einer den Kompressor antreibenden Turbine bestehen, und wobei in jeder Stufe ein mit Wasser beschickter Kühler, insbesondere eine Waschkolonne, angeordnet ist, dadurch gekennzeichnet, dass in mindestens einer Stufe im Strömungsweg des Druckgases zwischen Kompressor und Turbine mindestens einem der Kühler entnommenes, erwärmtes Wasser zugemischt wird.

2. Anlage nach Anspruch 1, dadurch gekennzeichnet, dass Wasser mindestens an einer Stelle im Strömungsweg des Druckgases zwischen Brennkammer bzw. katalytischen Reaktor und Turbine zugemischt wird.

3. Anlage nach Anspruch 1 oder 2, dadurch gekennzeichnet, dass Wasser an mindestens einer Stelle im Strömungsweg des Druckgases zwischen Kompressor und Brennkammer bzw. katalytischen Reaktor zugemischt wird.

4. Anlage nach Anspruch 1, wobei mindestens in einer Stufe zwischen Austritt aus der Turbine und Kühler ein Verdampfer angeordnet ist, wobei der im Wärmeaustausch mit Druckgas erzeugte Dampf einer Dampfturbine zugeführt wird, welche einen oder mehrere, nach der letzten Stufe angeordnete Kompressoren antreibt, dadurch gekennzeichnet, dass Wasser aus mindestens einem der Kühler an mindestens einer Stelle im Strömungsweg des Druckgases zwischen dem Kompressor und der Turbine einer oder mehrerer Stufen zugemischt wird.

5. Anlage nach Anspruch 4, dadurch gekennzeichnet, dass in mindestens einer Stufe zwischen der Brennkammer bzw. dem katalytischen Reaktor und der Turbine ein Dampferzeuger angeordnet ist, wobei die Stelle für die Wasserzumischung zwischen dem Ueberhitzer und dem Turbineneintritt liegt.

6. Anlage nach Anspruch 1, dadurch gekennzeichnet, dass für die Gaserzeuger Strahltriebwerke eingesetzt sind.

7. Anlage nach Anspruch 1, dadurch gekennzeichnet, dass für die Gaserzeuger Turbolader eingesetzt sind.

8. Anlage nach Anspruch 1, dadurch gekennzeichnet, dass das Wasser mindest teilweise dampfförmig zugemischt wird.

FIG. 1

0234363

FIG. 2

FIG. 3

FIG. 4

0234363

FIG. 5

20, 20"a, 20"b, 20"c, 22", 23", 23"a, 23"b, 23"c, 25", 30", 32", 33", 34", 35", 35"a, 36", 37", 48", 49", 50", 51", 54", 55", 56", 61"

# EUROPÄISCHER RECHERCHENBERICHT

**Europäisches Patentamt**

**0234363**
Nummer der Anmeldung

EP 87 10 1625

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,Y | CH-A- 630 702 (MANDRIN) <br> * Insgesamt * <br><br> --- | 1-6 | F 02 C 6/04 <br> F 01 K 21/04 |
| Y | CH-A- 457 973 (AGUET) <br> * Spalte 1, Zeile 1 - Spalte 4, Zeile 62; Spalte 7, Zeile 28 - Spalte 8, Zeile 11; Figuren 1,5 * <br><br> --- | 1-6 | |
| Y | DE-A-2 837 714 (ZENKNER) <br><br> * Seite 6, Absatz 2; Seite 10, Zeile 1 - Seite 13, Zeile 3; Figur 3 * <br><br> --- | 1-5,7, 8 | |
| Y | DE-A-2 009 301 (VETTER) <br><br> * Insgesamt * <br><br> --- | 1-5,7, 8 | |
| A | GB-A-1 415 521 (KELLET) <br><br> * Insgesamt * <br><br> --- | 1,3,4, 8 | RECHERCHIERTE SACHGEBIETE (Int. Cl.4) <br><br> F 02 C <br> F 01 K |
| A | FR-A-1 010 954 (RATEAU) <br> * Figur 5 * <br><br> --- | 1,8 | |
| A | FR-A-2 321 091 (SOBOLEV) <br> * Insgesamt * <br><br> ----- | 1,8 | |

Der vorliegende Recherchenbericht wurde für alle Patentansprüche erstellt.

| Recherchenort <br> DEN HAAG | Abschlußdatum der Recherche <br> 01-06-1987 | Prüfer <br> IVERUS D. |
|---|---|---|